# EUROPEAN PATENT SPECIFICATION

(11) **EP 1 820 911 B1**
(45) Date of publication and mention of the grant of the patent: **18.08.2010**
(21) Application number: 07102170.3
(22) Date of filing: 12.02.2007
(51) Int. Cl.: E03C 1/20, E03C 1/22, E03F 5/04, B63B 17/00, B63J 2/00, B32B 15/01

(54) **Drain installation**
Abflusseinrichtung
Installation du tuyau d'écoulement

(30) Priority: 15.02.2006 DK 200600220
(43) Date of publication of application: 22.08.2007
(73) Proprietor: Blücher Metal A/S, 7480 Vildbjerg (DK)
(72) Inventor: Lohmann, Hans, 4180 Sorø (DK)
(74) Representative: Nielsen, Leif

(56) References cited:
- GB-A- 1 402 216
- US-A- 3 798 010
- US-A- 4 010 965
- US-A- 4 193 529
- US-A- 5 296 647
- US-A1- 2005 129 971

## Description

### Field of the Invention

The present invention concerns a drain installation including drain bowls and drain pipes for mounting in structures of aluminium and where the drain installations include steel, preferably stainless steel.

### Background of the Invention

In the ship building industry, through several years there has been a shift from steel to aluminium for making light vessels. The drain installations hitherto used have been of steel, usually stainless steel, and have been mounted by welding to the ship structure. Such welding is not possible in ships where floors, storey partitionings and other structural parts are made of aluminium.

One solution could be to make the drain installations in aluminium, but this is an expensive solution requiring investments in double production equipment and larger stores, since there is still a need for the known drain installations of steel. Furthermore, drain installations of steel are often required in order to handle the various types of waste water in a safe way.

The prior art drain installations are usually made in expensive tools, entailing that one wants to keep the prior art designs. Furthermore, the same design will often be used in various connections where there is no problem with using the traditional steel materials. Therefore, it is wished to keep drain installations with as few changes as possible in order to optimise production and storage.

Through several years, there has been recognised a problem in connection with fastening traditional drain installations in structures with aluminium in floors and storey partitionings, without producing a usable technical solution enabling efficient and cheap production of the drain installations.

Other constructions are known in which adaptors and transitions elements are used between steel and aluminium. US 4,193,529, which is considered to be the closest prior art and discloses the features of the preamble of claim 1, discloses a collar having an inner steel ring for connection on an installation and an outer aluminium ring for connection on a ship deck and an installation respectively. This collar has a limited use. US 3,798,010 disclose a connection between steel/aluminium with a stable/strong connection in the boundary layer, however no concrete constructions are described which provides for a use which is easy and simple. US 2005/012,997 disclose a connection between steel/aluminium with a stable/strong connection in the boundary layer. However also in this case no concrete constructions are described which provides for a use which is easy and simple.

### Object of the Invention

It is the purpose of the present invention to indicate a solution to this problem by indicating a drain installation in places where the traditional drain installations of steel can be used in a simple manner in structures where these drain installations cannot be fastened in the traditional way.

### Description of the Invention

According to the present invention, this is achieved with a drain installation of the type mentioned in the introduction, which is peculiar in that the drain installation includes connecting means for disposition against the structure in which the drain installation is fitted, that these connecting means includes plane annular flanges with superposed layers which layers are provided in the form of a laminate at least including a layer of aluminium and a layer of steel which are united by rolling for forming the laminate in coherent form, and that the steel layer is welded to the drain installation while the aluminium layer is intended for welding to the structure.

In this way, the aluminium layer of the connecting means may now be welded to the aluminium parts of the structure and the steel layer of the connecting means to the steel parts of the drain installation. The drains installations hitherto used, which have been of steel, usually stainless steel, may thus be mounted by welding in structures of aluminium. Welding of drain installations of steel is thus possible in structures as e.g. ships where floors, storey partitionings and other structural parts are made of aluminium.

Moreover, the connecting means may hereby be made in a simple way for interacting with drain bowls and drain pipes that necessitate fastening in surfaces via the annular flanges.

According to a further embodiment, the drain installation according to the invention is peculiar in that the connecting means further comprises a bushing with two concentric layers in combination with the plane annular flanges. Hereby it is possible to obtain a simple interacting with drain bowls and drain pipes which shall be attached to beam structures or thicker structures via the bushings.

According to a further embodiment, the drain installation according to the invention is peculiar in that the structure includes a navy vessel with deck and beam construction made of aluminium. Installations according to the invention are particularly suited for ships where hulls of aluminium are used to a higher degree, and where traditional drain installations in the form of drain bowls and drain pipes made of stainless steel are desired.

According to a further embodiment, the drain installation according to the invention is peculiar in that the aluminium layer has a thickness between 3 and 8 mm, preferably 5-6 mm, and that the steel layer has a thickness between 3 and 8 mm, preferably 5-6 mm. This provides design advantages that satisfy by far the most situations of application. However, it is also possible to work with dimensions which are greater or lesser than these ranges.

According to a further embodiment, the drain installation according to the invention is peculiar in that the connecting means are separate elements which are connected to the drain installation in connection with its mounting in the structure. The installations may hereby be produced in a traditional way by using traditional tools and the connecting means are also made by methods and on tools for optimising the production process. Furthermore, it is possible to have stores of various products which are only combined when knowing the actual conditions of mounting. One may hereby optimise stores of elements for drain installations and connecting means. This is particularly an advantage when not speaking of much standardised products, and where individual adaptation of where individual adaptation of the products is required.

According to a further embodiment, the drain installation according to the invention is peculiar in that the connecting means are separate elements which are connected to the drain installation in connection with its making. This enables making drain installations in a form in which they are ready for installation. This may particularly be an advantage by very standardised products.

According to a further embodiment, the drain installation according to the invention is peculiar in that the connecting means are elements made integral with the drain installation. In some cases, one can make products which are ready for use directly at the making of the drain installations. This may possibly be effected by combining different types of sheets in production tools, or by using construction sheets made of a laminate which at least includes a layer of aluminium and a layer of steel, which have been brought together for forming the laminate in coherent form.

According to a further embodiment, the drain installation according to the invention is peculiar in that the aluminium layer and the steel layer are united by rolling. In practice, this is a simple way of establishing a laminate which is brought together for forming the laminate in coherent form.

### Description of the Drawing

In the following, the invention will be described with reference to the accompanying drawing, wherein:
- Fig. 1: shows a perspective view of a first embodiment of a drain installation according to the invention;
- Fig. 2: shows a cross-section through the embodiment shown in Fig. 1;
- Figs. 3-6: show partial sections for illustrating details of the design shown in Figs. 1 and 2;
- Fig. 7: shows a second embodiment of a drain installation according to the invention;
- Fig. 8: shows a cross-section through the embodiment shown in Fig. 7; and
- Figs. 9-12: show partial sections for illustrating details of the design shown in Figs. 7 and 8.

### Detailed description of the invention

Identical or corresponding elements in different Figures of the drawing will be provided with the same designations below. No specific explanation will thus be given in connection with each single Figure.

In the different Figures of the drawing, a drain installation in the form of a drain pipe is generally designated with reference 1, and a drain installation in the form of a drain bowl will generally be designated with the reference 2.

Drain pipes 1 and drain bowls 2 shown in the Figures are separate embodiments which are not exhaustive, as other forms of drain pipes and other forms of drain bowls are also possible within the scope of the invention.

In all Figures, connecting means in the form of a flange is generally designated with reference 3, and connecting means in the form of a bushing will generally be designated with the reference 4. Furthermore, connecting means in the form of a collar bushing will generally be designated with the reference 5.

In the Figures of the drawing, the connecting means 3-5 are made of a laminate which is generally designated with the reference 6. In the Figures, a laminate 6 appears, including two layers where an aluminium layer is generally designated with the reference 7, and a steel layer which is generally designated with the reference 8. The layers 7, 8 of the laminate 6 are in the same Figure provided in the form of a coherent laminate produced by rolling the two layers together.

It is noted that the laminate may consist of more layers, as it is only to be provided that an aluminium layer is provided for welding to a structure where the drain installation will be mounted, and a steel layer intended for being welded to the drain installation.

In the different Figures of the drawing, the welding of the steel layer to the installation is generally designated with reference 9, and the parts of the aluminium layer for welding to the structure in which the drain installation is to be mounted will generally be designated with the reference 10.

In general, it is noted that the weldings 9, 10 may include large or small faces for the aluminium layer and the steel layer.

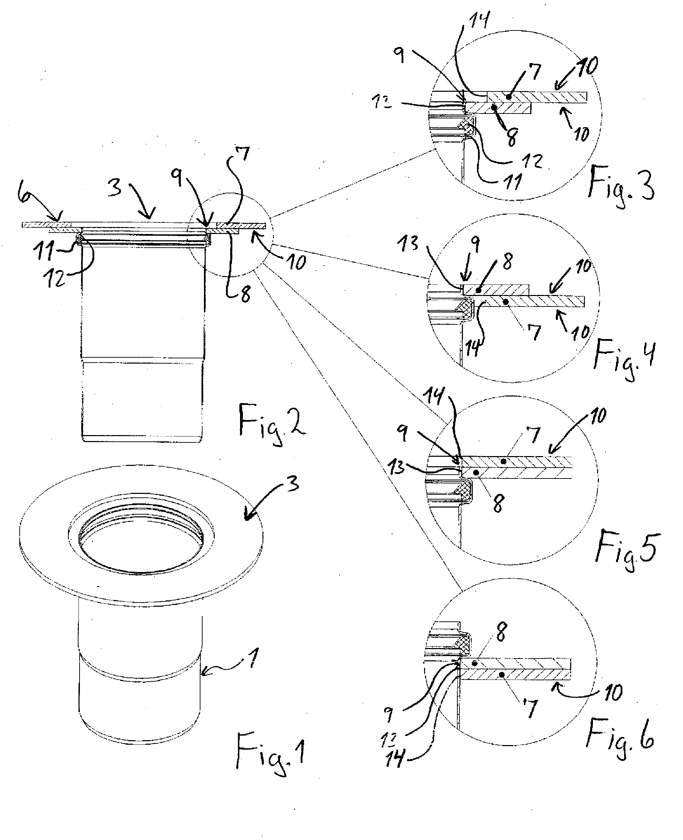

In Figs. 1 and 2 appears a drain pipe 1 which is provided with a flange 3. It is seen that the pipe 1 has an annular recess 11 for receiving a sealing ring 12.

It appears from Fig. 3 that the annular flange 3 is provided with a steel layer 8 which has an aperture 13 with a diameter corresponding to the diameter of the pipe 1, and which is intended for resting on the top side of the recess 11. The aluminium layer 7 has an aperture 14 which is greater than the aperture 13 and intended for a position above the pipe 1.

Fig. 4 shows a design where the steel layer 8 is disposed in the same way as shown in Fig. 3, and where the aluminium layer 7 is disposed at a position under the steel layer in order to be opposite the pipe 1.

Fig. 5 shows a situation where the aperture 13, 14 has the same diameter in the aluminium layer 7 and the steel layer 8. The aluminium layer 7 is intended for being disposed above the steel layer, corresponding to the position shown in Fig. 3.

Fig. 6 illustrates a situation where the apertures 13, 14 have the same diameter, as it is shown in Fig. 5. However, both layers 7, 8 are here disposed at a position under the recess 11.

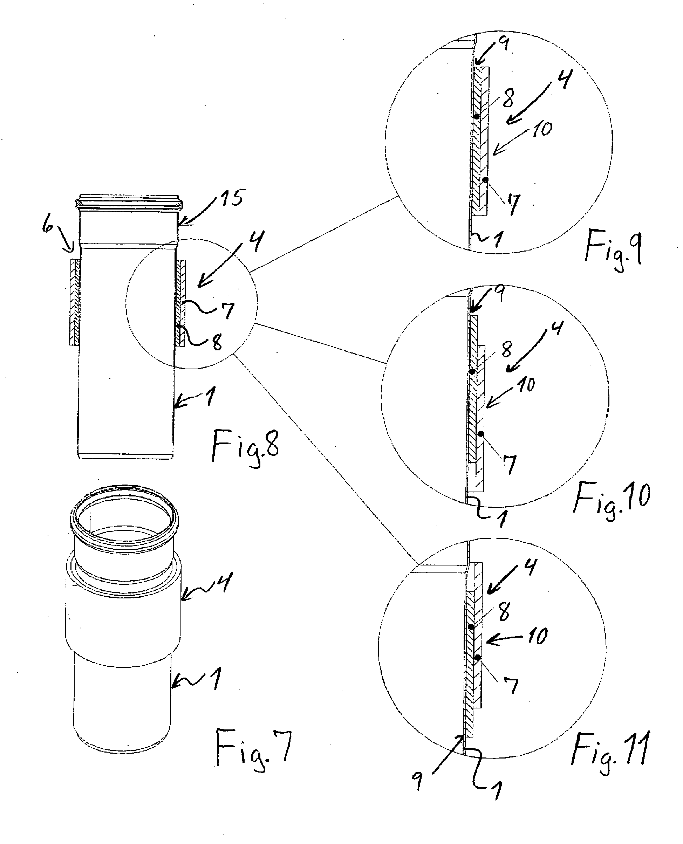

Fig. 7 shows a drain bowl 2 with a flange 3. It appears that the drain bowl 2 has a drain stub 18 and an outer bowl 19 disposed thereabove. In the outer bowl 19, there may be provided inner bowls, return flow stop, gratings or other elements that may be required for the function of the drain bowl 2.

In the outer bowl 19, there is provided an annular flange 20 and 21, between which a sealing ring 22 is provided. In the outer bowl 19, there is thus not provided a recess for receiving the sealing ring 22.

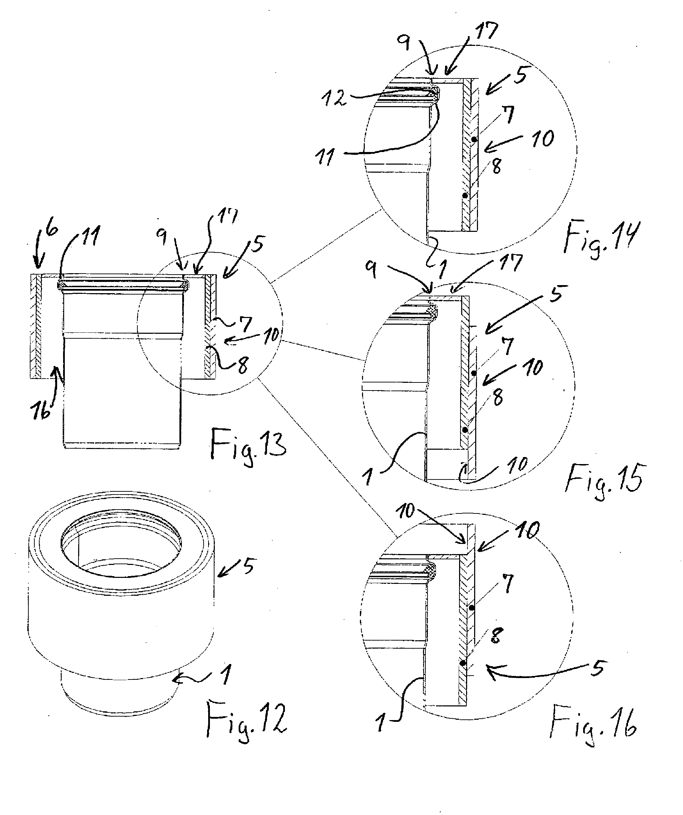

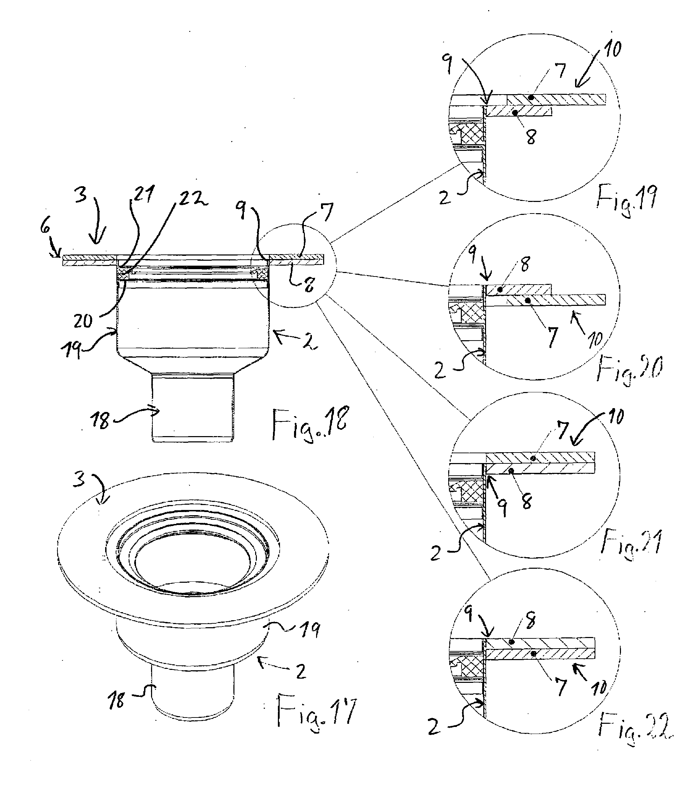

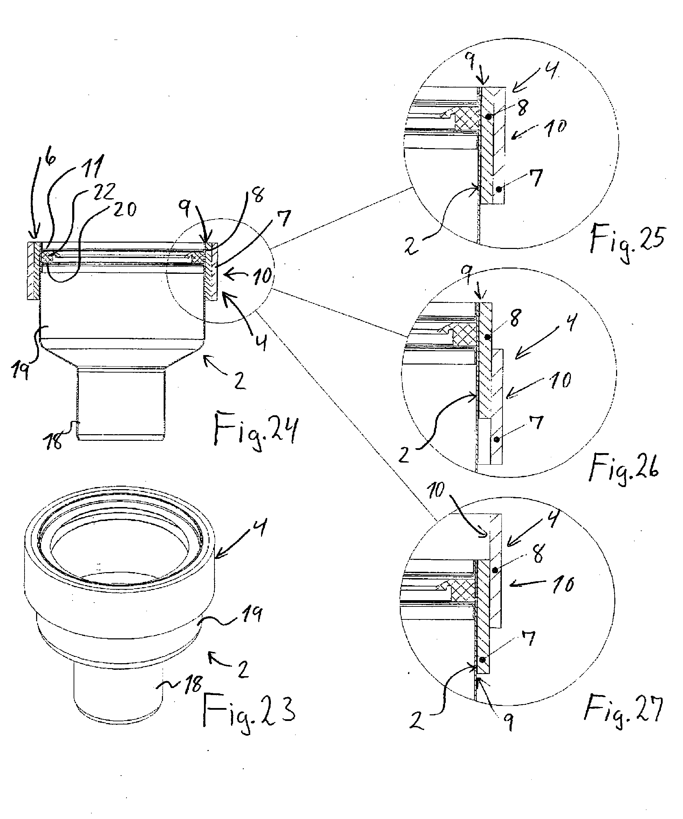

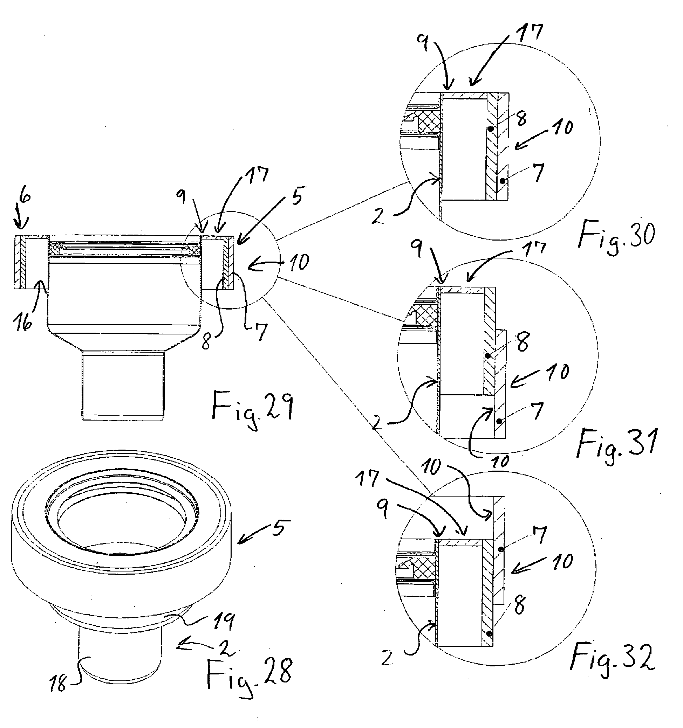

In Figures 9-12 appear applications of embodiments of flanges which are fitted on the drain bowl 2 in a way analogous to the embodiments explained with reference to Figs. 3-6. It thus appears that the steel plate 8 is all embodiments are provided with its aperture 13 and thereby the welding 19 in the upper edge area of the drain bowl 2.

For the sake of good order it is noted that the flange 13 may be disposed at other positions along the outer side of the outer bowl 19.

In the above, the invention has been explained with reference to specific embodiments.

## Claims

1. A drain installation including drain bowls and drain pipes, suitable for mounting in structures of aluminium and where the drain installation includes steel, preferably stainless steel, **characterised in that** the drain installation includes connecting means for disposition against the structure in which the drain installation is fitted, that these connecting means includes plane annular flanges with superposed layers, which layers are provided in the form of a laminate at least including a layer of aluminium and a layer of steel which are brought together for forming the laminate in coherent form, and that the steel layer is welded to the drain installation while the aluminium layer is intended for welding to the structure.

2. A navy vessel with a drain installation according to claim 1, wherein the structure is the navy vessel with deck and beam construction made of aluminium.

3. Drain installation according to any preceding claim, wherein the connecting means further comprises a bushing with two concentric layers in combination with the plane annular flanges.

4. Drain installation according to any preceding claim, wherein the aluminium layer has a thickness between 3 and 8 mm, preferably 5-6 mm, and that the steel layer has a thickness between 3 and 8 mm, preferably 5-6 mm.

5. Drain installation according to any preceding claim, wherein the connecting means are separate elements which are connected to the drain installation in connection with its mounting in the structure.

6. Drain installation according to any of claims 1-4, wherein the connecting means are separate elements which are connected to the drain installation in connection with its manufacture.

7. Drain installation according to any of claims 1 -4, wherein the connecting means are elements which are made integral with the drain installation.

8. Drain installation according to any preceding claim, wherein the aluminium layer and the steel layer are united by rolling.

## Patentansprüche

1. Ablaufeinrichtung mit für den Einbau in Strukturen aus Aluminium geeigneten Ablaufwannen und Ablaufrohren, und wobei die Ablaufeinrichtung Stahl, vorzugsweise rostfreien Stahl, enthält, **dadurch gekennzeichnet, daß** die Ablaufeinrichtung Verbindungsmittel zur Unterbringung direkt an der mit der Ablaufeinrichtung bestückten Struktur umfaßt, daß die Verbindungsmittel glatte, ringförmigen Flanschen mit aufeinander angeordneten Schichten umfassen, wobei die Schichten in der Form von einem wenigstens eine Aluminiumschicht und eine Stahlschicht aufweisenden Laminat vorgesehen sind, und die Schichten zur Bildung des Laminats in kohärenter Form zusammengefügt sind, und daß die Stahlschicht mit der Ablaufeinrichtung verschweißt ist, während die Aluminiumschicht zum Verschweißen mit der Struktur vorgesehen ist.

2. Marinefahrzeug mit einer Ablaufeinrichtung nach Anspruch 1, wobei die Struktur der Marinefahrzeug mit Deck und Balkenkonstruktion aus Aluminium ist.

3. Ablaufeinrichtung nach irgendeinem der vorhergehenden Ansprüche, wobei das Verbindungsmittel weiterhin eine Büchse mit zwei konzentrischen Schichten in Kombination mit den glatten, ringförmigen Flanschen umfaßt.

4. Ablaufeinrichtung nach irgendeinem der vorhergehenden Ansprüche, wobei die Aluminiumschicht eine Stärke zwischen 3 und 8 mm, vorzugsweise 5-6 mm aufweist, und daß die Stahlschicht eine Stärke zwischen 3 und 8 mm, vorzugsweise 5-6 mm aufweist.

5. Ablaufeinrichtung nach irgendeinem der vorhergehenden Ansprüche, wobei die Verbindungsmittel getrennte und mit der Ablaufeinrichtung bei deren Montage in der Struktur verbundenen Elementen sind.

6. Ablaufeinrichtung nach irgendeinem der vorhergehenden Ansprüche 1-4, wobei die Verbindungsmittel getrennte und mit der Ablaufeinrichtung bei deren Herstellung verbundenen Elementen sind.

7. Ablaufeinrichtung nach irgendeinem der vorgehenden Ansprüche 1-4, wobei die Verbindungsmittel mit der Ablaufeinrichtung integrierten Elementen sind.

8. Ablaufeinrichtung nach irgendeinem der vorhergehenden Ansprüche, wobei die Aluminiumschicht und die Stahlschicht durch Walzen zusammengefügt werden.

## Revendications

1. Une installation du tuyau d'écoulement comprenant des cuvettes d'écoulement et des tuyaux d'écoulement aptes â être montés dans des constructions en aluminium et lorsque l'installation du tuyau d'écoulement comprend de l'acier, de préférence de l'acier inoxydable, **caractérisée en ce que** l'installation du tuyau d'écoulement comporte des moyens de connection pour positionnement contre la construction où l'installation du tuyau d'écoulement est aménagée, que ces moyens de connection comprennent des brides planes et annulaires avec des couches superposées, lesquelles couches sont réalisées en forme d'un stratifié comprenant au moins une couche d'aluminium et une couche d'acier qui sont rejointes pour réaliser le stratifié en forme cohérente, et que la couche d'acier est soudée sur l'installation du tuyau d'écoulement tandis que la couche d'aluminium est prévue pour soudage sur la construction.

2. Une navire avec une installation du tuyau d'écoulement selon la revendication 1, dans laquelle la construction constitue la navire avec construction de pont et de bôme en aluminium.

3. Installation du tuyau d'écoulement selon l'une quelconque des revendications précédentes, dans laquelle les moyens de connection comprennent encore une douille avec deux couches concentriques en combinaison avec les brides planes et annulaires.

4. Installation du tuyau d'écoulement selon l'une quelconque des revendications précédentes, dans laquelle la couche d'aluminium a une épaisseur entre 3 et 8 mm, de préférence de l'orde de 5 à 6 mm, et que la couche d'acier a une épaisseur entre 3 et 8 mm, de préférence de l'ordre de 5 à 6 mm.

5. Installation du tuyau d'écoulement selon l'une quelconque des revendications précédentes, dans laquelle les moyens de connection constituent des éléments séparés qui sont connectés à l'installation du tuyau d'écoulement lors de son montage dans la construction.

6. Installation du tuyau d'écoulement selon l'une quelconque des revendications 1 à 4, dans laquelle les moyens de connection constituent des éléments séparés qui sont connectés à l'installation du tuyau d'écoulement lors de sa fabrication.

7. Installation du tuyau d'écoulement selon l'une quelconque des revendications 1 à 4, dans laquelle les moyens de connection constituent des éléments qui sont intégrés avec l'installation du tuyau d'écoulement.

8. Installation du tuyau d'écoulement selon l'une quelconque des revendications précédentes, dans laquelle la couche d'aluminium et la couche d'acier sont assemblées par laminage.
